# EUROPÄISCHE PATENTSCHRIFT

(11) **EP 1 135 449 B1**
(45) Veröffentlichungstag und Bekanntmachung des Hinweises auf die Patenterteilung: **15.12.2004**
(21) Anmeldenummer: 99950684.3
(22) Anmeldetag: 09.10.1999
(51) Int. Cl.: C09J 153/02, G11B 7/26

(54) **SCHMELZKLEBSTOFF ZUR VERKLEBUNG VON DVDS**
HOT-MELT ADHESIVE FOR GLUEING DVDS
ADHESIFS THERMOFUSIBLES POUR LE COLLAGE DE DISQUES NUMERIQUES POLYVALENTS

(30) Priorität: 20.10.1998 DE 19848146
(43) Veröffentlichungstag der Anmeldung: 26.09.2001
(73) Patentinhaber: Henkel Kommanditgesellschaft auf Aktien, 40589 Düsseldorf (DE)
(72) Erfinder: BUTTERBACH, Rüdiger, D-45219 Essen (DE); MAASSEN, Ulrike, D-41468 Neuss (DE); KOPANNIA, Siegfried, D-47809 Krefeld (DE); BONKE, Dirk, D-40595 Düsseldorf (DE)
(86) Internationale Anmeldenummer: PCT/EP1999/007579
(87) Internationale Veröffentlichungsnummer: WO 2000/023537

(56) Entgegenhaltungen:
- WO-A-98/40883
- DE-A- 3 840 391
- US-A- 5 936 934

## Beschreibung

Die Erfindung betrifft Schmelzklebstoffe zur Verklebung von sandwichartig aufgebauten DVDs sowie ein Verfahren zur Herstellung von sandwichartig aufgebauten DVD.

Mit "DVD" werden Digital Versatile Disks oder Digital Video Disks bezeichnet. Dies sind optische Speichermedien analog der bekannten CD (Compact Disk). Der wesentliche Unterschied der DVD zur CD und anderen vorbekannten optischen Speicherplatten ist die erheblich höhere Informationsdichte der gespeicherten Musik-, Bild-, oder Dateninformation bei der DVD. Diese höhere Daten- bzw. Informationsdichte des Speichermediums stellt erhöhte Anforderungen an das Herstellverfahren sowie an die dafür verwendeten Materialien.

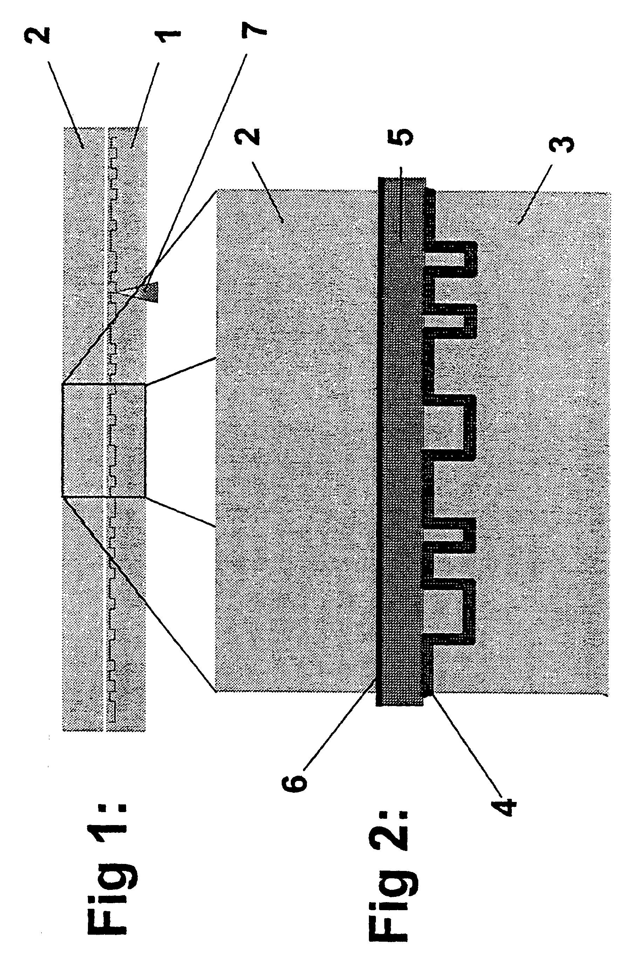

Ein möglicher Aufbau für eine DVD ist in der Figur 1 schematisch dargestellt, es handelt sich hierbei um eine sogenannte "DVD 5", diese DVD besteht im wesentlichen aus 2 Hälften, sie ist einseitig und trägt eine Informationsschicht, ihre Speicherkapazität beträgt 4,7 Gigabyte. In der Figur 1 ist die Schicht, die die Information trägt mit "1" bezeichnet und die keine Information tragende Deckschicht mit "2". Der zur Abtastung der Information erforderliche Laserstrahl ist mit "7" bezeichnet.

Der Aufbau der DVDs unterscheidet sich also von den heute gebräuchlichen und allgemein bekannten GD's (Compact Disk) dadurch, daß die DVDs aus einer "Sandwich"-Konstruktion gebildet werden. Während die CD's im wesentlichen aus einer 1,2 mm dicken Scheibe aus Polycarbonat oder Poly(meth)acrylatharz bestehen, sind die DVDs aus jeweils zwei 0,6 mm dicken Scheiben hergestellt. Hierfür wird heute fast ausschließlich Polycarbonat verwendet. Durch eine verfeinerte Datenstruktur und Laser mit geringer Wellenlänge kann eine Informationsschicht der DVD ca. 4,7 Gigabyte an Information enthalten, während die herkömmliche CD nur etwa 640 Megabyte an Information speichern kann.

Die sandwichartige Konstruktion der DVD bedingt, daß die beiden Schichten 1 und 2 miteinander verbunden werden müssen. Gemäß älterem Stand der Technik wurden zum Verbinden der beiden Schichten miteinander Klebstoffe auf Lösungsmittelbasis verwendet, in neuerer Zeit wurden Schmelzklebstoffe, UV-härtbare lösungsmittelfreie flüssige Klebstoffe sowie UV-vernetzbare Schmelzklebstoffe vorgeschlagen.

Zur Herstellung einer DVD sind im wesentlichen folgende Arbeitsschritte unbedingt notwendig:
- Die Polycarbonat- oder Poly(meth)acrylat-Rohlinge müssen im Spritzgußverfahren hergestellt werden,
- der Rohling 1, der die Informationsschicht trägt, wird mit einer reflektierenden Schicht beschichtet. Dies ist in der Regel eine im Vakuum aufgedampfte Reflexionsschicht, z.B. aus Aluminium.
- Diese reflektierende Schicht muß unmittelbar nach der Herstellung gegen Korrosion geschützt werden. In einer bekannten Ausführungsform wird daher auf diese Schicht eine Lackschicht aufgebracht, die durch UV-Strahlen ausgehärtet wird. Ein alternatives Verfahren ist die Aufbringung eines Schutzfilms aus einem thermoplastischen Material.
- Der Rohling ohne Informationsschicht 2 kann nach unterschiedlichen Verfahren mit Bild und Textinformationen bedruckt werden.
- Je ein Rohling 1 und 2 werden mit einem Klebstoff verklebt.

Die DE-A-3224647 beschreibt ein Herstellverfahren für optische Videoplatten bzw. digitale Tonplatten. Dort wird vorgeschlagen, daß die die Information tragende Schicht nach der Beschichtung mit einem reflektierenden Film aus Aluminium einen Schutzfilm aus einem wärmeschmelzenden filmbildenden Mittel versehen wird, das bei einer vorbestimmten Temperatur schmilzt und bei Raumtemperatur sich verfestigt. In einer Ausführungsform ist dieses wärmeschmelzende filmbildende Mittel gleichzeitig der Klebstoff zum Verbinden der beiden Plattensubstrathälften. In einer weiteren Ausführungsform wird dieses filmbildende Mittel mit einem weiteren Klebstoff beschichtet, der bei Raumtemperatur klebrig ist, mit Hilfe dieses Klebstoffes werden die beiden Plattensubstrate miteinander verbunden. Die DE-A-3224647 macht keine Angaben über die Zusammensetzung des wärmeschmelzbaren filmbildenden Mittels oder des bei Raumtemperatur klebrigen Klebstoffes. Außerdem sind der Lehre der DE-A-3224647 keine Hinweise zu entnehmen, ob diese klebenden Mittel auch zur Herstellung der DVDs geeignet sind.

Die DE-A-3246857 beschreibt eine optische Platte, die ein Paar von Substraten umfaßt, von denen mindestens eines auf einer Oberfläche gebildete Informationsvertiefungen besitzt. Auf dieser Schicht der Informationsvertiefungen ist eine metallische Schicht eines Reflektionsfilms aufgebracht, auf diese metallische Reflektionsschicht ist wiederum eine Harzschutzschicht aufgebracht. Auf dieser Harzschutzschicht befindet sich eine Kleberschicht, die zum Verbinden der beiden Substrathälften dient. Die DE-A-3246857 schlägt vor, daß als Kleber Schmelzklebstoffe verwendet werden, die als Grundpolymer eine Mischung aus einem oder mehreren thermoplastischen Elastomeren enthalten. Der Lehre der DE-A-3246857 kann weiterhin entnommen werden, daß die dort beschriebenen Schmelzklebstoffe übliche klebrigmachende Harze sowie Additive, beispielsweise Füllmaterialien, Antioxidantien oder UV-Absorber enthalten um deren Wärme- und Witterungsbeständigkeit zu erhöhen. Es wird weiterhin gesagt, daß die Schmelzviskosität des Klebers einen Wert von 1.000 Poise bei 160 ° C nicht überschreiten soll, damit der Klebstoff keine nachteiligen Wirkungen auf den dampfbeschichteten metallischen Film ausübt. Über eine Eignung dieser Klebstoffe zur Herstellung von DVDs werden keine Angaben gemacht.

Gemäß der Lehre der DE-A-3840391 ist die Verwendung von Schmelzklebstoffen bei der Verklebung von Substratpaaren zur Herstellung von Video-Disks bzw. digitalen Audio-Disks wegen ihrer geringen Wärmestabilität problematisch. Die Verwendung von UV-härtbaren Monomer-Zusammensetzungen als Klebstoff kann dieser Lehre zufolge Korrosion des Substrats bewirken. Die DE-A-3840391 schlägt zur Verklebung der Substratpaare bei der Herstellung von Video-Disks die Verwendung von UV-vernetzbaren Schmelzklebstoffen vor. Es werden keine Angaben darüber gemacht, ob diese UV-vemetzbaren Schmelzklebstoffe zur Herstellung von DVDs geeignet sind.

Wie bereits eingangs erwähnt, zeichnet sich die DVD gegenüber den bekannten CD's bzw. optischen Disks (auch Laserdisk genannt) durch eine höhere Daten- bzw. Informationsdichte des Speichermediums aus, weshalb sie höhere Anforderungen an das Herstellverfahren sowie die dafür verwendeten Materialien, z.B. Klebstoffe stellt. Diese Problematik wird ausführlich in der EP-A-0 735 530 beschrieben. Bei der hohen Informationsdichte und dem kleinen Durchmesser der Scheibe einer DVD ist die tolerierbare Abweichung des von der optimalen planaren Ausrichtung der Scheibe beim Einlegen in das Abspielgerät signifikant kleiner als bei den herkömmlichen Laserdisks, so daß eine geringe Abweichung der Ausrichtung der Scheibe das reproduzierte Informationssignal deutlich verfälschen kann. Aus diesem Grunde muß eine in das Abspielgerät eingelegte DVD auch unter der thermischen Belastung einer längeren Spieldauer im Abspielgerät ohne Verbiegungen oder Verwerfungen verbleiben können, obwohl die beiden Einzelschichten der DVD nur aus etwa 0,6 mm starken Kunststoffpreßlingen bestehen. UV-härtende Klebstoffe neigen beispielsweise bei schlagartiger Belastung zu Adhäsionsversagen, da sie nach Aushärtung meist sehr spröde sind. Ebenso weisen die meisten UV-härtenden Klebstoffe sowie andere Reaktionsklebstoffe einen relativ hohen Eigenschrumpf aus, durch die hieraus resultierende Krafteinwirkung des Klebstoffes auf die Reflexionsschicht kann es zur Beeinträchtigung des Informationsgehaltes und der Betriebssicherheit der DVD kommen. Aus diesem Grunde schlägt die EP-A-0 735 530 vor, zur Verklebung der beiden DVD-Hälften eine Kombination aus einem Schmelzklebstoff und einem flüssigen Reaktionsklebstoff zu verwenden. Zusammensetzungen für die vorgeschlagenen Schmelzklebstoffe werden nicht genannt. Es wird vorgeschlagen, für die flüssigen Reaktionsklebstoffe kationisch polymerisierende UV-härtende Klebstoffe zu verwenden.

Die WO-A-98/40883 beschreibt die Verwendung eines Schmelzklebstoffes mit einer Schmelzviskosität von über 100.000 mPa.s bei 160°C zum Verkleben von sandwichartig aufgebauten Digital Video Discs (DVD). In bevorzugten Ausführungsformen sollen die Schmelzklebstoffe Pigmente enthalten zur Erzielung kontrastreicher Hintergründe zur Verbesserung der bildlichen Darstellungen bzw. Textinformationen, die auf den DVDs angebracht werden. Die Schrift macht keine Angaben über die thermische Beständigkeit der so verklebten DVDs insbesondere im Hinblick auf eine möglichst verzerrungsfreie Abtastmöglichkeit der auf der DVD enthaltenen Information.

Die JP-A-09 208 919 beschreibt Zusammensetzungen von Hotmelt-Klebstoffen für optische Disks, die im wesentlichen aus drei Komponenten aufgebaut sind, wobei die eine Komponente ein Styrolharz ist, das aus Styroldienblockcopolymeren oder deren hydrierten Derivate besteht, als zweite Komponente enthalten diese Schmelzklebstoffe Klebrigmacher auf der Basis von Kolophonium-, Terpen- oder Petroleumharzen, wobei der Erweichungspunkt der Klebrigmacher mindestens 115°C, bevorzugt mindestens 140°C sein soll. Weiterhin sollen die Schmelzklebstoffe nach der Lehre dieser Schrift Wachse enthalten, die vorzugsweise Paraffinwachse, Micro-Wachse, niedermolekulares Polyethylen, niedermolekulares Polypropylen und nicht-kristallines Poly-α-Olefin sein sollen. Insbesondere wird vorgeschlagen, Wachse zu verwenden, die in ihrer Molekularstruktur keine funktionelle Gruppe aufweisen, daher wird vorgeschlagen, vorzugsweise kristallines Polypropylen mit einem mittleren Molekulargewicht von maximal 20.000 einzusetzen. Die JP-A-09 208 919 macht zwar Angaben über Standard-Klebstoffeigenschaften wie Ring- und Kugelerweichungspunkt, Schmelzviskosität, Schälfestigkeit, Klebefestigkeit und Kriechen bei erhöhter Temperatur, diese Angaben erlauben jedoch keine Rückschlüsse auf die Brauchbarkeit dieser Klebstoffe für die Verklebung von DVDs.

Gemäß neuestem Stand der Technik zur Qualitätssicherung von optischen Datenträgern, insbesondere DVDs sind in neuerer Zeit Meßsysteme entwickelt worden, die es erlauben, die tangentiale (tilt) sowie radiale Verbiegung (dishing) der Disk durch Triangulation zu bestimmen. Hierbei wird die Ablenkung eines reflektierten Laserstrahlbündels ausgewertet. Der Grad der Ablenkung wird dabei über einen Empfänger, der die Position des abgelenkten Lichtstrahles in elektrische Signale umwandelt, aufgenommen und an den analog/digital-Wandler zur Auswertung weitergeleitet. Als Beispiel für ein derartiges Meßsystem sei das Optical Disc Test System Advanced version (ODT-A) der Firma Conttec GmbH genannt.

Insbesondere bei thermischer und/oder Feuchtigkeitsbelastung beeinflußt der verwendete Klebstoff sowohl die tangentiale als auch die radiale Verbiegung einer Disk in erheblichem Umfang.

Ausgehend von diesem Stand der Technik galt es, einen Klebstoff bereitzustellen, der eine möglichst wirtschaftliche Herstellung der DVDs ermöglicht, ohne die Nachteile der UV-härtenden Klebstoffe bzw. der bisher bekannten Schmelzklebstoffe zu haben und der trotzdem die strengen Anforderungen nach neuestem Stand der Technik zur Qualitätssicherung von DVDs erfüllt.

Die Lösung der Aufgabe ist den Patentansprüchen zu entnehmen. Sie beruht im wesentlichen auf der Verwendung eines Schmelzklebstoffes zur Herstellung von Digital Versatile Discs (DVDs) auf der Basis
a) mindestens eines thermoplastischen Elastomers
b) mindestens eines Kohlenwasserstoffharzes
c) mindestens eines Poly-α-Olefins
d) mindestens eines funktionelle Gruppen tragenden polaren Wachses.

Die erfindungsgemäß zu verwendenden Schmelzklebstoffe können dabei zusätzlich zu den obengenannten wesentlichen Aufbaukomponenten noch klebrigmachende Harze, gegebenenfalls Weichmacher, Stabilisatoren/Antioxidantien, gegebenenfalls Füllstoffe oder Streckmittel, Pigmente, Haftvermittler oder deren Mischungen enthalten.

Beispiele für die thermoplastischen Elastomere der Komponente a) sind thermoplastische Polyurethane (TPU), die in der Regel auf der Basis aromatischer Diisocyanate aufgebaut sind. Insbesondere eignen sich auch Blockcopolymere vom A-B-, A-B-A-, A-(B-A)ₙ-B- sowie (A-B)ₙ-Y-Typ, worin A einen aromatischen Polyvinylblock darstellt und der B-Block einen gummiartigen Mittelblock umfaßt, der teilweise oder vollständig hydriert sein kann. Beispiele für derartige Blockcopolymere enthalten als A einen Polystyrolblock und B einen im wesentlichen kautschukartigen Polybutadienund/oder Polyisoprenblock, Y kann eine mehrwertige Verbindung sein und n eine ganze Zahl von mindestens 3. Zur Verbesserung der Wärmestabilität kann ggf. der Mittelblock B (d.h. der Polybutadien- bzw. Polyisoprenblock) teilweise hydriert sein, wodurch zumindest ein Teil der ursprünglich vorhandenen Doppelbindungen entfernt wird. Derartige Blockcopolymere werden auch als SBS-(Styrol-Butadien-Styrol-)Copolymer oder als SIS-(Styrol-Isopren-Styrol)Copolymer bzw. als SEPS-(Styrol-Ethylen-Propoylen-Styrol)-, SEEPS-(Styrol-Ethylen-Ethylen-Propylen-Styrol)- oder SEBS-(Styrol-Ethylen-Butadien-Styrol)-Copolymer von diversen Herstellern angeboten.

Als Kohlenwasserstoffharz der Komponente b) eignen sich die aliphatischen, cycloaliphatischen oder aromatischen Kohlenwasserstoffharze oder auch aliphatisch-aromatische Kohlenwasserstoffharze, Petroleumkohlenwasserstoffharze sowie deren Hydrierungsprodukte und Mischungen. Diese Kohlenwasserstoffharze sind bekanntlich Polymere mit einer Molmasse von im allgemeinen < 2.000. Sie werden durch die Polymerisation von C₅-Schnitten von ungesättigten Verbindungen gewonnen und in vielen Fällen in einem nachfolgenden Schritt hydriert. Konkrete Beispiele hierfür sind Kohlenwasserstoffharze auf der Basis von Polycyclopentadien mit nachfolgender Hydrierung, derartige Produkte sind unter dem Handelsnamen Escorez von der Firma Exxon im Handel. Analoge Produkte werden auch von den Firmen CdF Chemie unter dem Handelsnamen Norsolene, GOODYEAR unter dem Namen Wing-Tack, HERCULES unter den Namen Hercures, Kristalex, Piccotac, REICHHOLD unter dem Namen Sta-tac oder von der Firma Idemitsu hergestellt.

Als Poly-α-Olefine der Komponente c) eignen sich die ataktischen α-Olefin-Co- und Terpolymere des Ethylens, Propylens und/oder 1-Butens mit einem Molekulargewichtsbereich zwischen 5.000 und 30.000, wobei das Molekulargewicht als Zahlenmittel durch Gelpermeationschromatographie (GPC) in Anlehnung an die DIN 55672 bestimmt wird. Derartige Co- bzw. Terpolymere können bekanntlich in einem kontinuierlich betriebenen Ziegler-Niederdruck-Polymerisations-Verfahren aus den vorgenannten Monomeren hergestellt werden. Sie werden auch als amorphe Poly-α-Olefine (APAO) bezeichnet, obwohl die erfindungsgemäß besonders bevorzugt einzusetzenden Poly-α-Olefine einen signifikanten teilkristallinen Anteil enthalten. Diese Teilkristallinität kann mit Hilfe der Differentialthermoanalyse (DTA) bestimmt werden, da die teilkristallinen Poly-α-Olefine in der Schmelzkurve ein oder mehrere ausgeprägte Peakmaxima haben können.

Die funktionelle gruppentragenden polaren Wachse der Komponente d) werden ausgewählt aus der Gruppe der funktionalisierten Polyolefine mit einem Molekulargewichtsbereich (GPC) zwischen etwa 4.000 und 80.000 auf der Basis des Ethylens und/oder Propylens mit Acrylsäure, Methacrylsäure sowie deren C₁ bis C₄ Estern, Itakonsäure, Fumarsäure, Vinylacetat, und insbesondere Maleinsäure sowie deren Mischungen. Dabei handelt es sich vorzugsweise um mit polaren Monomeren gepfropfte oder copolymerisierte Ethylen-, Propylen- oder Ethylen-Propylencopolymere mit Verseifungs- bzw. Säurezahlen zwischen 2 und 50 mg KOH/g.

Gegebenenfalls können die erfindungsgemäßen Schmelzklebstoffe an sich bekannte Hilfs- und Zusatzstoffe enthalten, hierzu zählen Füllstoffe, Pigmente, Weichmacher und Stabilisatoren. Als Füllstoffe können beispielsweise Calciumcarbonat, Calcium-Magnesiumcarbonat, Talkum, Kieselsäure, Ruß, Zinkweiß, Titandioxid oder andere anorganische Pigmente verwendet werden.

Die ggf. einzusetzenden Weichmacher richten sich im wesentlichen nach der verwendeten Polymerkomponente. Beispiele für Weichmacher sind Prozeßöle, insbesondere naphtenische Prozeßöle, Paraffinöle, Rizinusöl, niedermolekulare Polybutene oder Polyisobutylene oder Polyisoprene sowie Dialkyl- oder Alkylaryl-Ester der Phthalsäure.

Als Stabilisatoren bzw. Antioxidantien zur Verminderung des oxidativen Abbaus sind eine Vielzahl der handelsüblichen Antioxidantien einsetzbar, Beispiele hierfür sind sterisch gehinderte Phenole und/oder Thioether und dergleichen. Es kann dabei von Vorteil sein, 2 oder mehr Antioxidantien unterschiedlicher chemischer Zusammensetzung zu kombinieren um besonders gute Stabilität zu erzielen.

Die erfindungsgemäßen Schmelzklebstoffe enthalten somit
- 10 bis 40 Gew.-%, vorzugsweise 15 bis 30 Gew.-% mindestens eines thermoplastischen Elastomers
- 15 bis 50 Gew.-%, vorzugsweise 25 bis 45 Gew.-% mindestens eines Kohlenwasserstoffharzes
- 10 bis 40 Gew.-%, vorzugsweise 15 bis 30 Gew.-% mindestens eines Poly-α-Olefins
- 10 bis 45 Gew.-%, vorzugsweise 15 bis 35 Gew.-% mindestens eines funktionelle Gruppen tragenden polaren Wachses
- 0 bis 10 Gew.-%, vorzugsweise 0,5 bis 10 Gew.-% an Hilfs- und Zusatzmitteln,
wobei die Gesamtmenge der vorgenannten Bestandteile sich zu 100 Gew.-% ergänzt.

Die erfindungsgemäße Verwendung des Schmefzklebstoffes soll im folgenden mit Hilfe der Figur 2 in ihren wesentlichen Arbeitsschritten erläutert werden:
1.) Die beiden Substratrohlinge, heute bestehen sie im wesentlichen aus Polycarbonat, werden im Spritzgußverfahren hergestellt.
2.) Die Substrathälfte 3, die im Spritzgußverfahren die Informationsschicht in Form von Vertiefungen (Pits) erhalten hat, wird mit einer reflektierenden Schicht beschichtet. Dies ist in aller Regel eine metallische Schicht, z.B. aus Aluminium, das im Vakuum aufgedampft wird.
3.) Die zweite Substrathälfte 2 kann gegebenenfalls auch eine Informationsschicht enthalten. Sie kann jedoch auch nach unterschiedlichen Verfahren auf der Innenseite mit bildlichen Darstellungen bzw. Textinformationen bedruckt werden. Beispielsweise kann die Innenseite mit einem mehrfarbigen spiegelbildlichen Druck 6 versehen werden.
4.) Entweder eine oder beide Substrathälften werden mit dem Schmelzklebstoff 5 beschichtet. Daran schließt sich das Fügen der beiden Substrathälften zur kompletten DVD an.

Die erfindungsgemäß zu verwendenden Schmelzklebstoffe werden dabei üblicherweise bei Auftragstemperaturen von mindestens 140 ° C, vorzugsweise 160 ° C in der Regel im Rollenauftragsverfahren auf die Substrathälften in einer Schichtdicke von > oder = 30 µm aufgetragen. Hierbei haben sich hohe Schmelz-Viskositäten im Bereich von 60.000 bis 130.000 mPa.s als sehr vorteilhaft erwiesen, da auch bei den notwendigen sehr hohen Verarbeitungsgeschwindigkeiten der Schmelzklebstoff sauber aufgetragen werden kann, ohne daß es zum Austritt des Klebstoffes über die äußeren Randbereiche der DVDs kommt. Außerdem wird bei diesen hohen Viskositäten die Bildung eines Fadenzuges vermieden. Die Schmelzklebstoffe weisen fernerhin eine sehr hohe Kohäsion auf, dadurch ergibt sich für die so hergestellte DVD eine gute und schnelle Rückstellkraft nach Biegebelastung beim Gebrauch bzw. der Handhabung der DVD.

Gegenüber den UV-härtenden Klebstoffen des Standes der Technik bietet die erfindungsgemäße Verwendung der Schmelzklebstoffe die folgenden Vorteile:
- Schmelzklebstoffe sind mindestens um den Faktor 4 wirtschaftlicher. Auch die Verklebungslinien für Schmelzklebstoffe sind billiger als die für UV-härtenden Systeme notwendigen Geräte und Anlagen.
- Es besteht die Möglichkeit der Einfärbung oder Pigmentierung der Klebstoffe, dadurch ergeben sich vielfältige Möglichkeiten in der Gestaltung der DVD.
- Schmelzklebstoffe weisen eine gutes Haftverhalten insbesondere bei schlagartiger Belastung auf, das gilt ganz besonders bei niedrigen Temperaturen.
- Schmelzklebstoffe können Ungenauigkeiten bzw. Formabweichungen der Polycarbonatsubstrate besser ausgleichen.
- Normalerweise fällt bei der Verarbeitung von Schmelzklebstoff während der laufenden Produktion keinerlei Abfall an.
- Es treten keine gesundheitsschädliche Gase wie z.B. Ozon oder Monomerdämpfe auf.

Bei einem Produktwechsel oder bei Produktionsstopps gibt es keine Entsorgungsprobleme mit den Schmelzklebstoffresten. Solche Reste können in kleinen Mengen praktisch als Hausmüll entsorgt werden.

Nachfolgend soll anhand einiger Beispiele der Gegenstand der vorliegenden Erfindung in seinen bevorzugten Ausführungsformen näher erläutert werden. Diese konkreten Ausführungsbeispiele sollen jedoch in keiner Weise den Umfang des Erfindungsgegenstandes einschränken. Bei den Zusammensetzungen sind dabei alle Mengenangaben Gewichtsteile, wenn nicht anders angegeben.

In einem heizbaren Misch- und Rührkessel wurden die in der nachfolgenden Tabelle 1 aufgeführten Zusammensetzungen in der Schmelze bis zur Homogenität gemischt.

Der Erweichungspunkt wurde gemäß ASTM E28 gemessen, die Viskosität wurde gemäß ASTM D3236 mit einem Brookfield RVT Viskosimeter, Spindel 27 gemessen. Die Wärmestandfestigkeit wurde an der Verklebung von 2 Polycarbonatteststreifen (PC) mit einer überlappenden Verklebung von 25 x 25 mm bestimmt, wobei die verklebten Substrate mit einem Gewicht von 1.360 g belastet wurden und anschließend mit einer Aufheizrate von 5°C pro 10 min erwärmt wurden. Es wurde in mehreren Einzelversuchen die Temperatur registriert, bei der die Verklebung versagte. Hierbei bedeutet "k" kohäsiver Bruch.

Im Spot-Test wurde ein Polycarbonat-Substrat (PC), wie es zur Herstellung von DVDs verwendet wird, mit einem Schmelzklebstoff-Fleck beschichtet und anschließend im Handversuch auf schälende und Schlag-Belastung getestet. Die Beurteilung erfolgte nach der Skala 0 = schlecht bis 15 = sehr gut.

Aus den vorgenannten Ergebnissen wird deutlich, daß die erfindungsgemäßen Schmelzklebstoffe eine sehr gute Wärmestandfestigkeit haben und sehr gute bis gute Schälfestigkeiten haben und auch einer Schlagbelastung sehr gut widerstehen.

Erfindungsgemäße Schmelzklebstoffe und ein Schmelzklebstoff des Standes der Technik (in Analogie zu der Lehre der JP-A-09 208 919) wurden mit dem ODT-A-Meßverfahren auf ihre tangentiale (tilt) und radiale (dishing) vor und nach Klimabelastung getestet. In der Klimabelastung (Alterungstest) wurden die verklebten Prüf-DVDs 96 Stunden bei 80°C und 95 % relativer Luftfeuchtigkeit gelagert und vor der Messung 24 Stunden bei normalem Klima konditioniert. Die Prüf-DVDs wurden dabei in einer Spritzgußmaschine der Firma Krauss-Maffei hergestellt und auf einem handelsüblichen Hotmelt-Bonder mit Klebstoff beschichtet. Die ODT-A-Messungen wurden auf einem Gerät der Firma Conttec gemessen. Die Meßergebnisse sind in der nachfolgenden Tabelle 2 aufgeführt. Die Spezifikation für 120 mm DVD-RAM läßt vor und nach Alterung eine maximale und minimale Abweichung in radialer Richtung (dishing) von 0,70° und einen tilt-Wert von maximal und minimal 0,30° zu. Wie aus der nachfolgenden Tabelle 2 ersichtlich, erfüllen die erfindungsgemäßen Beispiele diese Forderung in sehr guter Weise sowohl vor als auch nach Klimaalterung. Die mit dem Schmelzklebstoff gemäß Stand der Technik verklebten DVDs weisen nach der Klimaalterung einen wesentlich zu hohen tilt- bzw. dishing-Wert auf.

**Tabelle 2**

| | 11 | 12 | 13 | Vergl. 1 | Vergl. 2 |
|---|---|---|---|---|---|
| Radiale Verbiegung (dishing) vor Alterung | | | | | |
| minimum (Grad) | -0,27 | -0,18 | -0,30 | n.a. | n.a. |
| maximum (Grad) | 0,04 | 0,26 | 0,24 | n.a. | n.a. |
| | | | | | |
| nach Alterung | | | | | |
| minimum (Grad) | -0,62 | -0,53 | -0,64 | -0,27 | -1,74 |
| maximum (Grad) | -0,11 | 0,16 | 0,08 | 1,47 | 0,68 |
| | | | | | |

| Tangentiale Verbiegung (Tilt) vor Alterung | | | | | |
|---|---|---|---|---|---|
| minimum (Grad) | -0,23 | -0,20 | -0,28 | n.a. | n.a. |
| maximum (Grad) | 0,07 | 0,16 | 0,09 | n.a. | n.a. |
| | | | | | |
| nach Alterung | | | | | |
| minimum (Grad) | -0,27 | -0,24 | -0,29 | -0,48 | -0.48 |
| maximum (Grad) | 0,10 | 0,09 | 0,13 | 0,81 | 0,11 |
| n. a. = nicht verfügbar | | | | | |

## Patentansprüche

1. Verwendung von Schmelzklebstoffen enthaltend
a.) mindestens ein thermoplastisches Elastomer
b.) mindestens ein Kohlenwasserstoffharz
c.) mindestens ein Poly-α-Olefin
d.) 10-45 Gew.% mindestens eines funktionelle Gruppen tragenden polaren Wachses, ausgewählt aus der Gruppe der funktionalisierten Polyolefine mit einem Molekulargewichtsbereich (GPC) von 4.000 bis 80.000 auf der Basis von Polymeren des Ethylens und/oder Propylens mit Acrylsäure, Methacrylsäure sowie deren C₁ bis C₄-Ester, Maleinsäure, Itakonsäure, Fumarsäure, Vinylacetat oder deren Mischungen.
zur Herstellung von Digital Versatile Disks (DVDs).

2. Verwendung nach Anspruch 1, **dadurch gekennzeichnet, daß** das/die thermoplastische(n) Elastomer(en) a.) ausgewählt wird/werden aus den Styrol-Dien-Blockcopolymeren, Styrol-Isopren-Styrol, Styrol-Butadien-Styrol sowie deren zumindest teilweise hydrierten Derivate oder deren Mischungen.

3. Verwendung gemäß Anspruch 1, **dadurch gekennzeichnet, daß** die Komponente b.) ausgewählt wird aus cycloaliphatischen Kohlenwasserstoffharzen, aromatischen Kohlenwasserstoffharzen, aliphatischen Kohlenwasserstoffharzen, aliphatisch-aromatischen Kohlenwasserstoffharzen, Petroleumkohlenwasserstoffharzen sowie deren Hydrierungsprodukten und Mischungen der vorgenannten Harze.

4. Verwendung nach Anspruch 1, **dadurch gekennzeichnet, daß** die Komponente c.) ausgewählt wird aus ataktischen α-Olefin-Co- und Terpolymeren des Ethylens, Propylens und/oder 1-Butens mit einem Molekulargewichtsbereich zwischen 5.000 und 30.000.

5. Verwendung nach mindestens einem der vorhergehenden Ansprüche, **dadurch gekennzeichnet, daß** der Schmelzklebstoff weitere übliche Hilfs- und Zusatzstoffe ausgewählt aus Füllstoffen, Pigmenten, Weichmachern, klebrigmachenden Harzen, Alterungsschutzmittel, insbesondere Antioxidantien und/oder UV-Schutzmitteln, Haftvermittler oder deren Mischungen enthält.

6. Verfahren zur Herstellung von sandwichartig aufgebauten Digital Versatile Disks (DVDs) **gekennzeichnet durch** die folgenden, wesentlichen Verfahrensschritte
a.) Aufbringen der Informationsschicht auf den Scheibenrohling,
b.) Beschichten der Informationsschicht mit einer das Licht reflektierenden Metallschicht, ggf. gefolgt vom Aufbringen einer Korrosionsschutzschicht,
c.) Beschichten der Metallschicht mit einer Schicht des Schmelzklebstoffes nach mindestens einem der Ansprüche 1 bis 4,
d.) ggf. Bedrucken der Innenseite der Scheibe mit einem Druckbild,
e.) ggf. Beschichten der Druckbildschicht mit einer Schmelzklebstoff-Schicht
f.) Verkleben der Schichten mit Hilfe der Schmelzklebstoff-Schicht(en) unter Verpressen.

## Claims

1. The use of hotmelt adhesives based on
(a) at least one thermoplastic elastomer
(b) at least one hydrocarbon resin
(c) at least one poly-α-olefin
(d) 10-45% by weight of at least one polar wax bearing functional groups selected from the group of functionalized polyolefins with a molecular weight range (GPC) of 4,000 to 80,000 based on polymers of ethylene and/or propylene with acrylic acid, methacrylic acid and C₁₋₄ esters thereof, maleic acid, itaconic acid, fumaric acid, vinyl acetate, carbon monoxide or mixtures thereof
for the production of digital versatile discs (DVDs).

2. The use claimed in claim 1, **characterized in that** the thermoplastic elastomer(s) (a) is/are selected from the styrene/diene block copolymers, styrene/isoprene/styrene, styrene/butadiene/styrene and at least partly hydrogenated derivatives thereof or mixtures thereof.

3. The use claimed in claim 1, **characterized in that** component (b) is selected from cycloaliphatic hydrocarbon resins, aromatic hydrocarbon resins, aliphatic hydrocarbon resins, aliphatic/aromatic hydrocarbon resins, petroleum hydrocarbon resins and hydrogenation products thereof and mixtures of the above-mentioned resins.

4. The use claimed in claim 1, **characterized in that** component (c) is selected from atactic α-olefin copolymers and terpolymers of ethylene, propylene and/or 1-butene with a molecular weight range of 5,000 to 30,000.

5. The use claimed in at least one of the preceding claims, **characterized in that** the hotmelt adhesive contains other typical auxiliaries and additives selected from fillers, pigments, plasticizers, tackifying resins, antiagers, more particularly antioxidants and/or UV stabilizers, coupling agents or mixtures thereof.

6. A process for the production of digital video discs (DVDs) **characterized by** the following key steps:
(a) applying the information layer to the disc blank,
(b) coating the information layer with a light-reflecting layer, optionally followed by application of an anti-corrosion layer,
(c) coating the reflective layer with a layer of the hotmelt adhesive claimed in at least one of claims 1 to 7,
(d) optionally printing the inside of the disc with graphics/text,
(e) optionally coating the print layer with a layer of hotmelt adhesive,
(f) bonding the two halves of the disc together under pressure using the hotmelt adhesive layer(s).

## Revendications

1. Utilisation d'adhésifs thermofusibles contenant
a) au moins un élastomère thermoplastique
b) au moins une résine hydrocarbonée
c) au moins une poly-α-oléfine
d) 10 à 45% en poids d'au moins une cire polaire portant des groupes fonctionnels, choisie dans le groupe des polyoléfines fonctionnalisées présentant une plage de poids moléculaires (CPG) de 4000 à 80000 à base de polymères de l'éthylène et/ou du propylène avec de l'acide acrylique, de l'acide méthacrylique ainsi que leurs esters en C₁ à C₄, de l'acide maléique, de l'acide itaconique, de l'acide fumarique, de l'acétate de vinyle ou leurs mélanges
pour la fabrication de disques numériques à usages variés (Digital Versatile Disks - DVD).

2. Utilisation selon la revendication 1, **caractérisée en ce que** le ou les élastomères thermoplastiques a) sont choisis parmi les copolymères séquencés de styrène et de diène, le styrène-isoprène-styrène, le styrène-butadiène-styrène ainsi que leurs dérivés au moins partiellement hydrogénés ou leurs mélanges.

3. Utilisation selon la revendication 1, **caractérisée en ce que** le composant b) est choisi parmi les résines hydrocarbonées cycloaliphatiques, les résines hydrocarbonées aromatiques, les résines hydrocarbonées aliphatiques, les résines hydrocarbonées aliphatiques-aromatiques, les résines hydrocarbonées de pétrole ainsi que leurs produits d'hydrogénation et les mélanges des résines susmentionnées.

4. Utilisation selon la revendication 1, **caractérisée en ce que** le composant c) est choisi parmi les copolymères et les terpolymères d'α-oléfines atactiques de l'éthylène, du propylène et/ou du 1-butène présentant un poids moléculaire entre 5000 et 30000.

5. Utilisation selon l'une quelconque des revendications précédentes, **caractérisée en ce que** l'adhésif thermofusible contient d'autres adjuvants et additifs usuels, choisis parmi les charges, les pigments, les plastifiants, les résines poisseuses, les agents de protection contre le vieillissement, en particulier des antioxydants et/ou des agents de protection contre les UV, les promoteurs d'adhérence ou leurs mélanges.

6. Procédé pour la fabrication de DVD (Digital Versatile Disks) à structure en sandwich, **caractérisé par** les étapes de procédé essentielles suivantes :
a) application de la couche d'informations sur l'ébauche du disque
b) revêtement de la couche d'informations par une couche métallique réfléchissant la lumière, le cas échéant suivi de l'application d'une couche de protection contre la corrosion,
c) revêtement de la couche métallique par une couche de l'adhésif thermofusible selon l'une quelconque des revendications 1 à 4,
d) le cas échéant impression de la face interne du disque avec une image,
e) le cas échéant revêtement de la couche de l'image par une couche d'adhésif thermofusible,
f) collage des couches à l'aide de la ou des couches d'adhésif thermofusible par compression.
